(19) **Europäisches Patentamt**
**European Patent Office**
**Office européen des brevets**

(11) **EP 2 772 471 A1**

(12) **EUROPEAN PATENT APPLICATION**
published in accordance with Art. 153(4) EPC

(43) Date of publication:
**03.09.2014 Bulletin 2014/36**

(21) Application number: **11874525.6**

(22) Date of filing: **25.11.2011**

(51) Int Cl.:
**C03C 3/087** (2006.01)

(86) International application number:
**PCT/JP2011/077157**

(87) International publication number:
**WO 2013/061479 (02.05.2013 Gazette 2013/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2011 JP 2011232515**

(71) Applicant: **CENTRAL GLASS COMPANY, LIMITED**
**Ube-shi, Yamaguchi 755-0001 (JP)**

(72) Inventors:
• **TSUZUKI, Tatsuya**
  **Mie 515-0001 (JP)**
• **MITAMURA, Naoki**
  **Mie 515-0001 (JP)**
• **NAKAHAMA, Katsuyuki**
  **Mie 515-0001 (JP)**
• **SHINOHARA, Makoto**
  **Mie 515-0001 (JP)**
• **NISHI, Mizuki**
  **Mie 515-0001 (JP)**

(74) Representative: **Manitz, Finsterwald & Partner**
**GbR**
**Martin-Greif-Strasse 1**
**80336 München (DE)**

(54) **SOLAR CELL COVER GLASS AND METHOD FOR PRODUCING SAME**

(57) [Problem] The present invention addresses the problem of providing glass which has high transmittance that is suitable for a solar cell cover glass and which is capable of easily preventing occurrence of warps when tempering.

[Solution] This solar cell cover glass is characterized in that it is composed of a planar soda lime glass with a thickness of 2-4 mm and is composed of a soda lime glass which has, as its ingredients, in mass%, 1.1-1.6 of $Al_2O_3$, 9-11 of CaO, 2.5-3.5 of MgO, 0.1-0.5 of total antimony oxide in terms of $Sb_2O_3$ and 0.005-0.02 of iron oxide in terms of $Fe_2O_3$, in which $Fe^{2+}$ accounts for 2-9% of $(Fe^{2+} + Fe^{3+})$ and which does not substantially contain cerium oxide and coloring components other than iron oxide.

**FIG.1**

GLASS FLOW
DIRECTION

EP 2 772 471 A1

## Description

### TECHNICAL FIELD

The present invention relates to a solar cell cover glass and to a method for producing the same.

### BACKGROUND OF THE INVENTION

A solar cell is, for the sake of protection thereof, provided integral with a cover glass through an interlayer such as an ethylene-vinyl acetate (EVA) copolymer resin film and a polyvinyl butyral (PVB) resin film to be formed into a panel. A solar cell demands high power generation efficiency and therefore a cover glass is required to have high solar transmittance. Accordingly, it is desired to use a glass containing a possibly less amount of coloring component (the so-called a low iron glass) therefor.

Even in the case of using the above-mentioned glass, however, iron oxides (a representative example of coloring component) are not a little contained in the raw material when the glass is industrially manufactured, so that the absorbance caused by iron oxides can hardly be zero. In fact, iron oxides exist in manufactured glass in the form of FeO and $Fe_2O_3$. The light absorption of FeO peaks in the vicinity of a wavelength of 1100 nm, which also affects a light absorption of 800 to 1000 nm and brings about a transmittance reduction of glass within this wavelength range. On the other hand, the light absorption of $Fe_2O_3$ peaks in the vicinity of a wavelength of 400 nm. In view of the above, adjustment of absorbance and wavelength range resulting from iron oxides and color adjustment to glass have been made by adjusting the amount of FeO and $Fe_2O_3$ contained in glass or by introducing any other components (see Patent Documents 1 and 2, for example).

As mentioned above, FeO contained in glass brings about a transmittance reduction within a light wavelength range of 800 to 1000 nm. Since this light wavelength range overlaps the maximum sensitivity region of a silicon-based solar cell etc., a cover glass for such a solar cell is required to contain a smaller amount of FeO as its ingredients. In Patent Documents 3 and 4, $CeO_2$ is introduced into a glass reduced in amount of iron oxides in order to adjust the valence number of iron oxides thereby controlling the valence number of iron in iron oxides contained in the glass. Moreover, in Patent Document 5, $Sb_2O_3$ is introduced into a glass reduced in amount of iron oxides in order to adjust the valence number of iron oxides, thereby controlling the valence number of iron in iron oxides contained in the glass.

### REFERENCES ABOUT PRIOR ART

#### Patent Documents

Patent Document 1: Japanese Patent Application Publication No. 2001-139343
Patent Document 2: Japanese Patent Application Publication No. H07-029810
Patent Document 3: Japanese Patent Application Publication No. H05-221683
Patent Document 4: Japanese Patent Application Publication No. 2000-143284
Patent Document 5: Japanese Patent Application Publication No. 2007-238398

#### Non-Patent Document

Non-Patent Document 1: K. Akeyoshi, E. Kanai, K. Yamamoto and S. Shima, "Reports of the Research Laboratory, Asahi Glass Co.,Ltd.", Vol. 17, pp. 23-36 (1967)

### SUMMARY OF THE INVENTION

#### Problems to be Solved by the Invention

A solar cell is to be disposed outdoor and therefore it is necessary to take flying substances such as gravels, stones and woods into account. Thus, a glass with high strength is required for a solar cell cover glass, so that a tempered glass is preferably used. A tempered glass is produced by heating a glass in a furnace to around its softening point and then rapidly cooling the surface of the glass with air drafts to form a compressive stress layer at the surface of the glass, thereby serving as a glass improved in physical and thermal impact strength and in scratch resistance.

The strength of a tempered glass tends to increase by raising the temperature of glass at the time of starting cooling in tempering; however, if the temperature is excessively increased, the glass is apt to cause warps. Tempering of glass is actually performed in a manner heat the glass to a certain temperature while conveying the glass by roller conveyor in a heating furnace; therefore, when heating was conducted with an excessively high temperature, the glass is apt to cause such a deformation as to droop downwardly under its own weight at clearances between conveyor rollers and may give rise to warps as a result. If warps are serious, there arises a problem of impairing the integration of a solar cell cover glass with a solar cell. More specifically, the reinforcement of glass and the prevention of warp of glass are mutually contradictory desired properties, so that it is one of technical challenges to acquire a tempered glass having a few warps.

Glass has property values that vary according to its composition. Therefore, easiness of causing compressive stress at the time of tempering varies depending on the property values. The relation between property values of glass and compressive stress caused in tempering process is reported by Akeyoshi (see Non-Patent Document 1) with the following expression (1).

$$\text{Compressive stress } \sigma c = (\alpha \cdot E \cdot h \cdot Q)/((1-m) \cdot 12k) \cdots\cdots\cdots(1)$$

<$\alpha$: Thermal expansion coefficient, E: Young's modulus, h: Thickness, Q: Cooling ability, m: Poisson's ratio, k: Thermal conductivity>

From the above-mentioned theoretical expression (1), it can be known that a glass having larger values in terms of Young's modulus, Poisson's ratio and thermal expansion coefficient and a smaller value of thermal conductivity serves as a glass more readily toughened or a glass that can be strengthened by lower temperatures or a glass more reliably restrained from generation of warps. In a case of soda lime glass provided for practical use, the above-mentioned values (Young's modulus, Poisson's ratio and thermal expansion coefficient etc.) do not so considerably vary according to the composition; accordingly, it is very important how far the thermal conductivity of glass can be reduced.

The light absorption of FeO contained in glass peaks in the vicinity of a wavelength of 1100 nm, and more specifically in the near-infrared region that can be readily directly converted into heat on a target substance. Hence a glass that has absorbed infrared rays with the above wavelength range is to be heated. In other words, an increase of the amount of FeO in glass easily brings about an increase of thermal conductivity of the glass. It is therefore necessary to reduce the amount of FeO for obtaining a well toughened glass.

Hitherto, there have been attempted: adjustments of absorbance and wavelength range resulting from iron oxides in glass; adjustments of color of glass; and for use in solar cell cover glass, suppression of reduction of transmittance within a wavelength range of 800 to 1000 nm which reduction is brought about by light absorption of FeO. However, a study of reducing the amount of FeO in iron oxides more than necessary has not been performed.

In Patent Document 1, for example, the amount of iron oxides is 0.02-0.05 mass%, and there is disclosed by Examples a glass where the amount of FeO in iron oxides is 22-36 %. Meanwhile, Patent Document 2 discloses an amount of iron oxides of less than 0.02 mass% and concretely discloses an amount of FeO in iron oxides of 60 %.

In Patent Documents 3 and 4, $CeO_2$ as an agent for adjusting the valence number of iron oxides is introduced into a glass having been reduced in amount of iron oxides thereby controlling the valence number of iron in iron oxides contained in the glass. Though Patent Document 3 discloses a glass where the amount of FeO in iron oxides is so small as to be 3 %, there may sometimes arise a problem that the glass gets colored due to solarization derived from $CeO_2$ because a solar cell cover glass is left outdoor for a long period of time as discussed above and therefore exposed to sunlight over the long term.

Moreover, Patent Document 5 discloses a glass containing iron oxides in an amount of not larger than 0.04 mass% and discloses in Example a glass where the amount of FeO in iron oxides is 9.8-16.7 %; however, a further reduction of the amount of FeO in iron oxides has not been attempted.

In view of the above, the present invention addresses the problem of providing glass which has high solar transmittance that is suitable for a solar cell cover glass and which is capable of easily preventing occurrence of warps when tempering.

**Means for Solving the Problems**

The present invention is provided in order to solve the above-mentioned problem, and more specifically, in order to further reduce the amount of FeO in a glass having been reduced in amount of iron oxides. Namely, a solar cell cover glass according to the present invention is characterized in that it is composed of a planar soda lime glass with a thickness of 2-4 mm and is composed of a soda lime glass which has, as its ingredients, in mass%, 1.1-1.6 of $Al_2O_3$, 9-11 of CaO, 2.5-3.5 of MgO, 0.1-0.5 of total antimony oxide in terms of $Sb_2O_3$ and 0.005-0.02 of iron oxide in terms of $Fe_2O_3$, in which $Fe^{2+}$ accounts for 2-9% of ($Fe^{2+}$ + $Fe^{3+}$) (which is the mass of iron oxides converted in terms of Fe) and which does not substantially contain cerium oxide and coloring components other than iron oxide.

Antimony oxide in glass functions as an agent for adjusting the valence number of iron oxides, and the quantity ratio between FeO and Fe2O3 in iron oxides can be adjusted by abundance of antimony oxide. The percentage of $Fe^{2+}$ to ($Fe^{2+}$ + $Fe^{3+}$) will hereinafter be referred to as "redox".

Abundance of antimony oxide exerts an influence upon "redox", but "redox" does not necessarily decrease with increase of the amount of antimony oxide. For example, in Example of Patent Document 5, though the amount of antimony oxide increases from 0.02-0.025 mass% to 0.1-0.2 mass%, "redox" is not necessarily decreased. It can be known from this that not only antimony oxide but also any other factors would act on "redox".

Through the present invention, there could be obtained a finding that, in a certain soda lime glass having been reduced in amount of iron oxides, "redox" in the glass can be decreased by having the glass contain 0.1-0.5 mass% of total antimony oxide in terms of $Sb_2O_3$, with which the present invention has been established.

The soda lime glass preferably contains total antimony oxide in an amount of 0.18-0.35 mass%, and more preferably 0.18-0.25 mass%, in terms of $Sb_2O_3$.

Additionally, a solar cell cover glass of the present invention is preferably has as its surface layer a compressive stress layer formed by tempering, wherein a warpage amount measured according to "JIS R 3206

(2003) (Tempered Glass)" is not higher than 1 %, and the number of broken particles obtained by fracture per unit area (50mm x 50mm) is not less than 40, preferably not less than 50 at the minimum. The upper limit of the minimum number of broken particles may be not more than 150, preferably not more than 140.

A preferable method for producing the solar cell cover glass according to the present invention is a production method performed by: a step of forming a molten glass by melting a raw material prepared to have a composition of the desired glass plate and then subjecting the molten glass to a method called roll-out forming to obtain a glass plate with a thickness of 2-4 mm; and a step of forming a compressive stress layer as a surface layer of the glass plate by tempering.

## EFFECTS OF THE INVENTION

According to the present invention, it is possible to provide a glass plate which has high solar transmittance that is suitable for a solar cell cover glass and which is capable of easily preventing occurrence of warps when tempering even if it is a relatively thin planar glass plate.

## BRIEF DESCRIPTION OF THE DRAWINGS

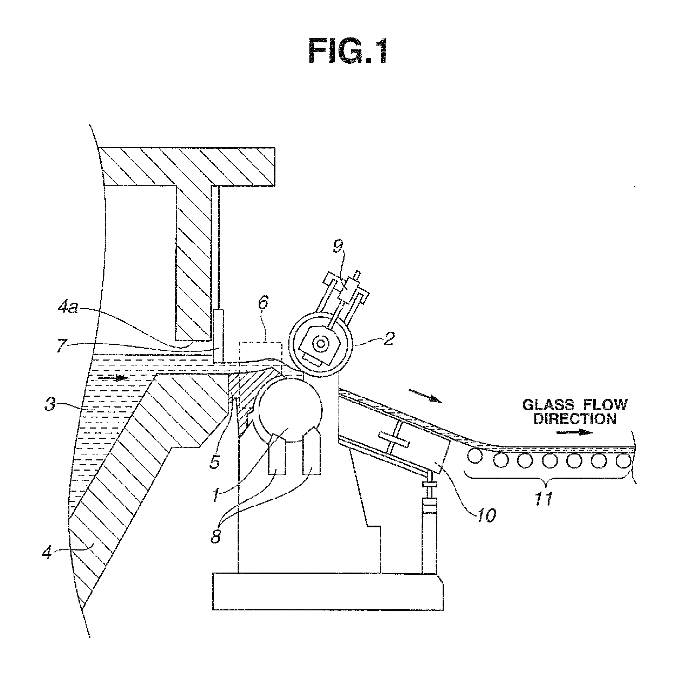

[Fig. 1] A partial side view of an embodiment of an apparatus for forming a soda lime glass to be used as a solar cell cover glass according to the present invention.

## MODE(S) FOR CARRYING OUT THE INVENTION

The present invention is a solar cell cover glass characterized by being composed of a planar soda lime glass with a thickness of 2-4 mm, preferably 2.5-3.5 mm, more preferably 2.7-3.3 mm and composed of a soda lime glass which has, as its ingredients, in mass%: 1.1-1.6 of $Al_2O_3$; 9-11 of CaO; 2.5-3.5 of MgO; 0.1-0.5 of total antimony oxide in terms of $Sb_2O_3$; and 0.005-0.02 of iron oxide in terms of $Fe_2O_3$, in which $Fe^{2+}$ accounts for 2-9% of ($Fe^{2+}$ + $Fe^{3+}$) and which does not substantially contain cerium oxide and coloring components other than iron oxide.

The glass contains at least $SiO_2$, CaO and $Na_2O$ as the primary components, in which the total mass of the components ($SiO_2$ + CaO + $Na_2O$) is not smaller than 90 mass%. In the soda lime glass of the present invention, the content of $SiO_2$ is 69-72.5 mass%, preferably 69.5-72 mass%, more preferably 70-71.5 mass%. Moreover, the content of $Na_2O$ is 13-15 mass%, more preferably 13.5-14.5 mass%. The glass may further contain $K_2O$ with a content of 0-0.1 mass%, preferably 0-0.08 mass%.

In order to provide high transmittance in a light wavelength range of from the visible region to the near-infrared region, it is preferable to lower the content of iron oxide. The present invention defines the content of iron oxide in terms of $Fe_2O_3$ as being 0.005-0.02 mass%. To decrease "redox" is equal to the increase of the amount of $Fe_2O_3$ of which light absorption peaks in the vicinity of 400 nm; however, the present invention defines the amount of $Fe_2O_3$ as being within the above-mentioned range so that the glass exhibits a neutral color. In addition, such a solar cell cover glass has little effect on the maximum sensitivity wavelength region of a silicon-based solar cell etc. (800 to 1000 nm).

In the case where the amount of iron oxide in terms of $Fe_2O_3$ is less than 0.005, refinement of glass material becomes a big factor of a cost increase and therefore not preferable. On the other hand, an amount exceeding 0.02 mass% is also not preferable since it tends to lower the visible transmittance of glass under the influence of light absorption in the vicinity of 400 nm and it brings about an increase of the amount of FeO. The amount of iron oxide in terms of $Fe_2O_3$ is preferably 0.008-0.018 mass%, more preferably 0.011-0.017 mass%. Moreover, an amount of iron oxide of less than 0.11 suppresses a cost increase more effectively than a case of an amount of less than 0.005 but, nevertheless it is not suitable for mass production.

The present invention is further characterized in that "redox" of glass is 2-9 %. If "redox" is less than 2 %, the cost of glass production is apt to increase, which is not preferable. Meanwhile, "redox" of 9 % or more is also not preferable since reduction of the amount of FeO is so insufficient as to heighten the degree of difficulty in tempering. It is preferable that "redox" is 3-9 %, more preferably 4-9 %.

A soda lime glass according to the present invention contains 0.1-0.5 mass% of total antimony oxide in terms of $Sb_2O_3$. This is because a content of smaller than 0.1 mass% is poor in effect of decreasing "redox" while a content of larger than 0.5 mass% not only becomes a factor of an increase of material cost but also not expected to provide the effect of decreasing "redox" even if larger amount is introduced. The content of total antimony oxide in terms of $Sb_2O_3$ is preferably 0.18-0.35 mass%, more preferably 0.18-0.25 mass%.

As antimony oxide, it is possible to use antimony trioxide ($Sb_2O_3$), antimony pentoxide ($Sb_2O_5$), sodium anti-monite ($NaSbO_3$) and the like as a raw material; however, the use of sodium antimonite ($NaSbO_3$) is preferable.

A soda lime glass according to the present invention has, in mass%, 1.1-1.6 % of $Al_2O_3$, 9-11 % of CaO, and 2.5-3.5 % of MgO. In the present invention, restriction of "redox" to low level had been achieved, even if antimony oxide is as much as that in Patent Document 5, for example. Though a factor of this effect remains uncertain, it can be assumed that the effect is attained by the above-mentioned amount of antimony oxide, by the optimization of the amount of each component and the like. It may be more preferable that the glass contains 1.2-1.5 % of $Al_2O_3$, 9.2-10.5 % of CaO, and 2.6-3 % of MgO.

In addition, MgO serves as a component preventing alkali components in glass from elution. Hence a smaller content tends to provide the glass with defects such as burn and therefore the glass is apt to be one not suitable for outdoor use over the long term. On the contrary, the present invention does not particularly exhibit defects such as burn.

A soda lime glass according to the present invention may contain $SO_3$, and its content may be 0.5 mass% at the maximum. The effect of $SO_3$ resides in improvements of glass in melting, clarification and formability. From the above viewpoint, the content of $SO_3$ may preferably be 0.25-0.5 mass%, more preferably 0.3-0.4 mass%.

A soda lime glass according to the present invention may contain a suitable amount of $TiO_2$, in order to enhance the ultraviolet absorptivity. When glass has an ultraviolet absorptivity, some effects become exhibited (for example, an effect of inhibiting a degradation of a solar cell or an interlayer disposed between the solar cell and a cover glass). Glass is getting yellowed by containing a large quantity of $TiO_2$, and therefore an upper limit to the content may be 0.1 mass%, preferably 0.07 mass%, more preferably 0.05 mass%. A lower limit to the content is not particularly specified but it may be 0.001 mass%.

A soda lime glass according to the present invention does not substantially contain cerium oxide and coloring components other than iron oxide. "There is no substantial content of cerium oxide" means that the content is to the extent, at most, of preventing the glass from solarization, and more specifically, it means that a content of cerium oxide in glass is lower than 10 ppm, preferably lower than 1 ppm.

"There is no content of coloring components other than iron oxide" means that components bringing a color to a soda lime glass, i.e., nickel oxide, cobalt oxide, chromium oxide, manganese dioxide and the like are not contained, and more specifically, it means a content of lower than 15 ppm, preferably lower than 10 ppm.

Referring now to Fig. 1, an embodiment of preparing a soda lime glass to be used for a solar cell cover glass of the present invention will be discussed. Fig. 1 shows an embodiment of an apparatus for forming a soda lime glass to be used as a solar cell cover glass of the present invention. The production apparatus is a roll-out forming apparatus that is capable of forming a plate-like cover glass 22 by running a molten glass (or a glass material) 3 between a first roller 1 and a second roller 2. This producing example hardly makes a reducing atmosphere in a forming step, which is different from float glass process where a molten glass is shaped into a sheet in a tin bath. This example is preferably employed because occurrence of a phenomenon in which antimony oxide at the surface layer of glass is reduced to be metal particles is consequently prevented.

The molten glass 3 is reserved in a melting bath 4. The melting bath 4 has an outlet 4a to which a lip die 5 that guides the molten glass 3 between the first and second rollers 1 and 2 is connected. The lip die 5 is provided having a guide block 6 that prevents the molten glass 3 from leaking out in a wide direction when the molten glass 3 is guided between the first and second rollers 1 and 2. The melting bath 4 is provided to have, at the outlet 4a, a cut knife 7 that can adjust the amount of outflow of the molten glass 3.

The first roller 1 is rotatably supported by a fixing device 8. Furthermore, the second roller 2 is rotatably supported by a fixing device 9.

A shaped glass shaped by passing between the first and second rollers 1 and 2 is conveyed through a conveyor plate 10 and conveyor rollers 11. The conveyor plate 10 is cooled in order that the shaped glass does not adhere thereto. In cooling the conveyor plate 10, a cooler utilizing air, water or the like is employed.

The molten glass 3 that flows out of the melting bath 4 is cooled to a temperature for forming, and then runs between the first and second rollers 1 and 2 to be subjected to roll forming to have a thickness of 2-4 mm. It is preferable in this process that a pattern is formed at the surfaces of the first and second rollers 1 and 2, since the pattern is transcribed onto the surface of the glass plate. For example, the first roller 1 may have been provided with a regular pattern (e.g. grooves of about 220 $\mu$m depth) at its surface while the second roller 2 may have been provided with an irregular pattern (e.g. grooves of about 5 $\mu$m depth).

It is preferable to conduct tempering on the glass plate obtained by the above-mentioned production apparatus or the like to form a compressive stress layer at the surface layer of the glass thereby improving the strength of the glass. When a larger compressive stress is applied to the glass, broken particles obtained by breaking the glass are more reduced in size and more increased in number. In the solar cell cover glass of the present invention, it is preferable that a warpage amount measured according to "JIS R 3206 (2003) (Tempered Glass)" is not higher than 1 % (preferably not higher than 0.5 %, more preferably not higher than 0.3 %) and that the number of broken particles obtained by fracture per unit area (50mm x 50mm) is not less than 40, preferably not less than 50 at the minimum. The upper limit of the above-mentioned minimum number of broken particles may be not more than 400, preferably not more than 200, more preferably not more than 150 because a higher upper limit tends to cause an increase of the warpage amount.

The glass plate obtained by the above-mentioned production apparatus or the like is heated to around a glass transition temperature (e.g. 550-650°C) while being conveyed by the conveyor rollers. The strength of tempered glass is apt to enhance by increasing the temperature of the glass at the time of starting cooling in tempering; however, an excessively higher temperature tends to provide the glass with warps. This is because the glass easily causes such a deformation as to droop downwardly under its own weight at clearances between conveyor rollers.

In the glass plate according to the present invention, it is preferable to start tempering when the glass plate has a temperature of 570-630°C, more preferably 580-620°C, by blowing air against the glass plate through a cooling nozzle. The wind pressure of blowing air is preferably 5-30 kPa, more preferably 7-20 kPa. Incidentally, in a case of tempering a planar normal soda lime float glass plate which has not been subjected to reduction of the amount of iron oxide, the temperature of the glass plate at the time of starting tempering is around 620-670°C.

## EXAMPLES

<Preparation of Glass>

A platinum melting pot was charged with raw materials including silica sand, aluminium oxide, soda ash, sodium sulfate, calcium carbonate, magnesium oxide, sodium antimonite and the like and prepared to have glass compositions shown in Examples 1-5 and Comparative Examples 1, 4 and 5 of Table 1. Conditions for producing samples were brought closer to those of a practical manufacturing line; namely, the platinum melting pot was inserted into a melting bath as shown in Fig. 1 to melt the raw material and then took out of the melting bath, and a molten glass was poured into a mold thereby obtaining a glass block. Thereafter the glass block was brought into an electric furnace kept at 550°C and allowed to cool therein thereby obtaining a glass sample. The composition and transmittance of the thus obtained glass sample were shown in Table 1. Incidentally, Comparative Examples 2 and 3 are cited from Examples 1 and 2 of Patent Document 5 for reference.

The amount of each glass component was determined by breaking the glass sample and then subjecting the broking sample to X-ray fluorescence analysis. Moreover, "redox" was obtained upon measuring the amount of $Fe^{2+}$ by colorimetry.

[Table 1]

| | Al$_2$O$_3$ | MgO | CaO | SiO$_2$ | Na$_2$O | K$_2$O | SO$_3$ | Antimo ny Oxide | Iron Oxid e | Redo x (%) | Transmittance (%) | |
| --- | --- | --- | --- | --- | --- | --- | --- | --- | --- | --- | --- | --- |
| | | | | | | | | | | | Solar Radiation | 1100 nm |
| Example1 | 1.3 | 2.7 | 9.6 | 71.7 | 14.1 | 0.0 | 0.3 | 0.2 | 0.01 1 | 8 | 91.2 | 91.4 |
| Example 2 | 1.3 | 2.7 | 9.6 | 71.8 | 14.2 | 0.0 | 0.3 | 0.1 | 0.01 1 | 9 | 91.1 | 91.3 |
| Example 3 | 1.3 | 2.7 | 9.6 | 71.8 | 14.2 | 0.0 | 0.3 | 0.1 | 0.01 6 | 6 | 90.8 | 90.6 |
| Example 4 | 1.3 | 2.7 | 9.6 | 71.7 | 14.1 | 0.0 | 0.3 | 0.2 | 0.01 7 | 6 | 90.9 | 91.0 |
| Example 5 | 1.3 | 2.7 | 9.6 | 71.6 | 14.1 | 0.0 | 0.3 | 0.4 | 0.01 4 | 5 | - | - |
| Comparative Example 1 | 1.3 | 2.7 | 9.6 | 71.8 | 14.2 | 0.0 | 0.3 | 0.0 | 0.01 2 | 13 | 90.7 | 90.3 |
| Comparativ e Example 2 | 1.8 | 4.1 | 7.8 | 72.3 | 13.7 | 0.0 | 0.2 | 0.1 | 0.01 5 | 14 | - | - |
| Comparativ e Example 3 | 1.8 | 4.1 | 7.8 | 72.2 | 13.7 | 0.0 | 0.2 | 0.2 | 0.01 5 | 12 | - | - |
| Comparativ e Example 4 | 0.8 | 3.8 | 9.5 | 70.7 | 14.3 | 0.0 | 0.5 | 0.2 | 0.01 3 | 10 | - | - |
| Comparativ e Example 5 | 1.2 | 0.6 | 10.7 | 72.7 | 14.3 | 0.0 | 0.3 | 0.2 | 0.01 0 | 16 | 91.4 | 91.6 |

EP 2 772 471 A1

<Evaluation of the Obtained Glass Sample>

i) Transmittance (or absorption coefficient) of solar radiation and a wavelength of 1100 nm

Measurement was conducted by using a spectrophotometer U-4100 (available from HITACHI, Ltd.) according to a test method discussed by JIS R 3106, i.e., a method for testing sheet glasses on transmittance, reflectance, emittance and solar heat gain coefficient, thereby obtaining transmittances of a glass of 3.2 mm thickness at solar radiation and a wavelength of 1100 nm.

Solar transmittance of glass samples of Examples 1-4 was 90.8-91.2 while that of glass of Comparative Example 1 was 90.7 and that of glass of Comparative Example 5 was 91.4. Additionally, transmittance of glass samples of Examples 1-4 at a wavelength of 1100 nm was 90.6-91.4 while that of glass of Comparative Example 1 was 90.3 and that of glass of Comparative Example 5 was 91.6.

ii) Thermal conductivity

Measurement was conducted by using a laser flash thermophysical properties analyzer LFA-502 (available from KYOTO ELECTRONICS MANUFACTURING CO., LTD.) according to a test method discussed by JIS R 1611, i.e., a method of testing thermal diffusivity, specific heat capacity and thermal conductivity by laser flash method, thereby obtaining thermal conductivity.

The thermal conductivity of glass of Example 3 was 0.002317 cal/cm·sec·°C while that of glass of Comparative Example 1 was 0.002333 cal/cm·sec·°C. For reference, the thermal conductivity of a normal soda lime float glass which has not been subjected to reduction of the amount of iron oxide was 0.222326 cal/cm·sec·°C.

<Tempering on Glass Plate>

A glass having a composition of Example 1 was shaped into a planar glass plate by an apparatus as shown in Fig. 1 so as to have a thickness of 3.2 mm. A sample of an inch square size was cut out of the formed glass plate, on which a strengthening treatment was conducted by a tempering apparatus (though not shown in drawing).

In the strengthening treatment, the glass plate was conveyed by a ceramic conveyor roller to a region heated to a certain temperature and then conveyed out of a furnace. Immediately after this, air was blown against the glass plate through a cooling nozzle thereby executing tempering. The temperature of the glass plate immediately before it was conveyed out of the furnace was defined as "the temperature of the glass plate at the time of starting tempering".

In Examples of the present invention, the tempering treatment was performed in a manner to specify the temperature of the glass plate (the middle section of the glass) immediately before it was conveyed out of the furnace at 600°C. As soon as the glass plate was conveyed out of the furnace, air of a wind pressure of 11 kPa was brown against the glass plate through the cooling nozzle and kept for a certain period of time until the glass had a temperature of 400°C or lower.

The thus obtained tempered glass was subjected to measurement in terms of the warpage amount and the number of broken particles obtained by fracture per unit area (50mm × 50mm) according to "JIS R 3206 (2003) (Tempered Glass)", with which it was confirmed that the warpage amount was 0.1 % and the number of broken particles was 95.

**Claims**

1. A solar cell cover glass **characterized by** being composed of a planar soda lime glass with a thickness of 2-4 mm and composed of a soda lime glass which has, as its ingredients, in mass%:

   1.1-1.6 of $Al_2O_3$;
   9-11 of CaO;
   2.5-3.5 of MgO;
   0.1-0.5 of total antimony oxide in terms of $Sb_2O_3$; and
   0.005-0.02 of iron oxide in terms of $Fe_2O_3$,

   in which $Fe^{2+}$ accounts for 2-9% of ($Fe^{2+} + Fe^{3+}$) and which does not substantially contain cerium oxide and coloring components other than iron oxide.

2. A solar cell cover glass as claimed in claim 1, **characterized by** being composed of a soda lime glass obtained from a glass plate subjected to roll-out forming and then tempered.

3. A solar cell cover glass as claimed in claim 1 or 2, **characterized in that** the solar cell cover glass has as its surface layer a compressive stress layer formed by tempering, wherein a warpage amount measured according to "JIS R 3206 (2003) (Tempered Glass)" is not higher than 1 % and the number of broken particles obtained by fracture per unit area (50mm $\times$ 50mm) is not less than 40 at the minimum.

4. A method for producing a solar cell cover glass as claimed in any one of claims 1 to 3, **characterized by** comprising:

   a step of forming a molten glass by melting a raw material prepared to have a composition as claimed in claim 1 and then subjecting the molten glass to roll-out forming to obtain a glass plate with a thickness of 2-4 mm; and
   a step of forming a compressive stress layer as a surface layer of the glass plate by tempering.

5. A method for producing a solar cell cover glass, as claimed in claim 4, **characterized in that** the temperature of the glass plate at the time of starting tempering is 570-630°C.

# FIG.1

GLASS FLOW
DIRECTION

## INTERNATIONAL SEARCH REPORT

International application No.

PCT/JP2011/077157

### A. CLASSIFICATION OF SUBJECT MATTER
*C03C3/087*(2006.01)i

According to International Patent Classification (IPC) or to both national classification and IPC

### B. FIELDS SEARCHED

Minimum documentation searched (classification system followed by classification symbols)
C03C1/00-14/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-538963 A (Saint-Gobain Glass France), 16 December 2010 (16.12.2010), entire text & US 2010/0304949 A1 & EP 2195278 A & WO 2009/047463 A1 & FR 2921357 A & FR 2921357 A1 & MX 2010001970 A & KR 10-2010-0071043 A & CN 101801870 A | 1-5 |
| A | JP 2000-159538 A (Asahi Glass Co., Ltd.), 13 June 2000 (13.06.2000), entire text (Family: none) | 1-5 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 February, 2012 (03.02.12) | 14 February, 2012 (14.02.12) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001139343 A
- JP H07029810 B
- JP H05221683 B
- JP 2000143284 A
- JP 2007238398 A

**Non-patent literature cited in the description**

- **K. AKEYOSHI ; E. KANAI ; K. YAMAMOTO ; S. SHIMA.** Reports of the Research Laboratory. Asahi Glass Co.,Ltd, 1967, vol. 17, 23-36